# EUROPEAN PATENT APPLICATION

(11) **EP 3 944 590 A1**
(43) Date of publication of application: **26.01.2022**
(21) Application number: 20187563.0
(22) Date of filing: 24.07.2020
(51) Int. Cl.: H04L 29/08, G06F 11/30, G06F 16/2455

(54) **APPARATUS AND A METHOD FOR PROCESSING TIME SERIES DATA**

(71) Applicant: Nokia Solutions and Networks Oy, 02610 Espoo (FI)
(72) Inventor: GUANGYUAN, Piao, Dublin 15 (IE); NICHOLSON, Pat, Dublin 15 (IE); VOITH, Thomas, 70806 Kornwestheim (DE); LUGONES, Diego, Dublin 15 (IE)
(74) Representative: Laine IP Oy

(57) **Abstract**

There is provided an apparatus comprising means for: receiving at least a first time series data of a first metric and a second time series data of a second metric; determining steady states in the first time series data; determining steady states in the second time series data; determining a first transition point between consecutive steady states in the first time series data; determining a second transition point between consecutive steady states in the second time series data; determining a time shift at least based on the first transition point and the second transition point; and aligning the first time series data and the second time series data at least based on the time shift.

## Description

### FIELD

Various example embodiments relate to processing of time series data, e.g. for machine learning purposes.

### BACKGROUND

Machine learning (ML) is often used to analyse big data. For example, ML may be used to recognize a person from a collection of billions of photos. From a time perspective, it may be said that in this kind of task, ML operates on a basis of actual or past snapshot(s) of data.

But there may be cases, where time has an impact on the ML process. An example of such a case is a disaster warning systems for predicting earthquakes, wherein ML may be used to analyse various sensor data in order to detect indications of a disaster early enough. A disaster warning system may be categorized as a system analysing data that leads to a certain situation, or a system enabling detection of indicators leading to a certain situation.

A further category is a system analysing data in order to detect certain behaviour of a system. The system may be a sluggish system, e.g. weather forecast system, which typically changes its conditions and/or parameters it operates on. Sluggish system may be fed data from interconnected Internet of Things (IoT) devices which continuously generate data via monitoring software or hardware sensor. For example, position information may be collected from user devices, e.g. GPS readings may be collected from smartphones, in order to perform traffic analytics, or air quality levels may be monitored and the collected information may be combined with weather forecasts to predict air quality in different areas throughout the day. In sluggish systems, e.g. in above examples, the effect of the collected time series data on the behaviour that is to be detected is delayed over time. Learning behaviour of such a system may be challenging.

### SUMMARY

According to some aspects, there is provided the subject-matter of the independent claims. Some example embodiments are defined in the dependent claims. The scope of protection sought for various example embodiments is set out by the independent claims. The example embodiments and features, if any, described in this specification that do not fall under the scope of the independent claims are to be interpreted as examples useful for understanding various example embodiments.

According to a first aspect, there is provided an apparatus comprising means for: receiving at least a first time series data of a first metric and a second time series data of a second metric; determining steady states in the first time series data; determining steady states in the second time series data; determining a first transition point between consecutive steady states in the first time series data; determining a second transition point between consecutive steady states in the second time series data; determining a time shift at least based on the first transition point and the second transition point; and aligning the first time series data and the second time series data at least based on the time shift.

According to an embodiment, the apparatus further comprises means for filtering a first time series data and/or a second time series data.

According to an embodiment, the steady states are determined by finding time intervals in which the value of the metric varies within a pre-determined range.

According to an embodiment, determining of the first transition point comprises determining an end point of a first steady state of the consecutive steady states of the first time series data as the first transition point.

According to an embodiment, determining of the first transition point comprises determining a difference between average values of the consecutive steady states of the first time series data; determining a half point of the difference as the first transition point.

According to an embodiment, determining of the first transition point comprises determining a time difference between the consecutive steady states of the first time series data; determining a point at half point of the time difference as the first transition point.

According to an embodiment, determining of the first transition point comprises determining an extended steady state by determining the time interval of the steady state to start when the first time series data reaches the pre-determined time range for the first time; determining a time difference between the consecutive steady states, wherein latter of the consecutive steady states is the extended steady state; determining a point at half point of the time difference as the first transition point.

According to an embodiment, the apparatus further comprises means for discretizing the first time series data to obtain a first sequence of symbols representing different states of time series data; discretizing the second time series data to obtain a second sequence of symbols representing different states, wherein each symbol represents a pre-determined time period and the state of time series data is one of a steady state; an unstable state; transition point.

According to an embodiment, the apparatus further comprises means for determining a distance between the first sequence and the second sequence.

According to an embodiment, the distance is determined based on Hamming distance.

According to an embodiment, the apparatus further comprises means for determining Hamming distance with shifts between the first transition point and the second transition point.

According to an embodiment, the apparatus further comprises means for assigning costs for mismatches between the symbols between the first sequence and the second sequence; computing alignment costs for different time shifts between the first sequence and the second sequence, wherein the time shift indicates amount of shifting the first sequence and the second sequence with respect to each other; selecting a time shift based on comparison of the alignment costs.

According to an embodiment, the apparatus further comprises means for providing as output one or more of: aligned time series data; information on steady states of the first time series data and of the second time series data; time series data annotated with steady state information, transition point information, and/or time shift information.

According to an embodiment, the means comprises at least one processor; and at least one memory including computer program code, the at least one memory and the computer program code configured to, with the at least one processor, cause the performance of the apparatus.

According to a second aspect, there is provided a method comprising: receiving at least a first time series data of a first metric and a second time series data of a second metric; determining steady states in the first time series data; determining steady states in the second time series data; determining a first transition point between consecutive steady states in the first time series data; determining a second transition point between consecutive steady states in the second time series data; determining a time shift at least based on the first transition point and the second transition point; and aligning the first time series data and the second time series data at least based on the time shift.

According to an embodiment, the method further comprises filtering a first time series data and/or a second time series data.

According to an embodiment, the steady states are determined by finding time intervals in which the value of the metric varies within a pre-determined range.

According to an embodiment, determining of the first transition point comprises determining an end point of a first steady state of the consecutive steady states of the first time series data as the first transition point.

According to an embodiment, determining of the first transition point comprises determining a difference between average values of the consecutive steady states of the first time series data; determining a half point of the difference as the first transition point.

According to an embodiment, determining of the first transition point comprises determining a time difference between the consecutive steady states of the first time series data; determining a point at half point of the time difference as the first transition point.

According to an embodiment, determining of the first transition point comprises determining an extended steady state by determining the time interval of the steady state to start when the first time series data reaches the pre-determined time range for the first time; determining a time difference between the consecutive steady states, wherein latter of the consecutive steady states is the extended steady state; determining a point at half point of the time difference as the first transition point.

According to an embodiment, the method further comprises discretizing the first time series data to obtain a first sequence of symbols representing different states of time series data; discretizing the second time series data to obtain a second sequence of symbols representing different states, wherein each symbol represents a pre-determined time period and the state of time series data is one of a steady state; an unstable state; transition point.

According to an embodiment, the method further comprises determining a distance between the first sequence and the second sequence.

According to an embodiment, the distance is determined based on Hamming distance.

According to an embodiment, the method further comprises determining Hamming distance with shifts between the first transition point and the second transition point.

According to an embodiment, the method further comprises assigning costs for mismatches between the symbols between the first sequence and the second sequence; computing alignment costs for different time shifts between the first sequence and the second sequence, wherein the time shift indicates amount of shifting the first sequence and the second sequence with respect to each other; selecting a time shift based on comparison of the alignment costs.

According to an embodiment, the method further comprises providing as output one or more of: aligned time series data; information on steady states of the first time series data and of the second time series data; time series data annotated with steady state information, transition point information, and/or time shift information.

According to a third aspect, there is provided an optionally non-transitory computer readable medium comprising program instructions that, when executed by at least one processor, cause an apparatus to at least to perform the method of the second aspect and one or more of the embodiments thereof.

According to a fourth aspect, there is provided a computer program configured to cause a method in accordance with at least the second aspect and one or more of the embodiments thereof to be performed.

### BRIEF DESCRIPTION OF THE DRAWINGS

Fig. 1 shows, by way of example, time series data from a virtual network function;
Fig. 2 shows, by way of example, a system for processing time series data;
Fig. 3 shows, by way of example, time series data of a sluggish system;
Fig. 4 shows, by way of example, determination of steady states of time series data;
Fig. 5 shows, by way of example, determination of transition points between steady states;
Fig. 6 shows, by way of example, determination of transition points between steady states;
Fig. 7 shows, by way of example, determination of transition points between steady states;
Fig. 8 shows, by way of example, a time shift procedure for two sequences;
Fig. 9 shows, by way of example, aligned time series data;
Fig. 10 shows, by way of example, a block diagram of an apparatus for processing time series data; and
Fig. 11 is a flow chart of a method for processing time series data.

### DETAILED DESCRIPTION

There is provided an apparatus and a method for processing multivariate time series data for machine learning.

Data may be fed to the sluggish system from interconnected Internet of Things (IoT) devices which continuously generate data via monitoring software or hardware sensor. For example, position information may be collected from user devices, e.g. GPS readings may be collected from smartphones, in order to perform traffic analytics. System employing the collected data may provide traffic forecasts for streets in a city based on predicted trajectories of drivers, i.e. users of the user devices. Another example of a sluggish system may be a system predicting air quality in different areas through the day based on monitored air quality levels combined with weather forecasts.

Time series data or data streams from different monitoring devices, e.g. IoT devices, form a set of metrics. To learn behaviour of a sluggish system producing the time series data it may be required that the system does not change the conditions/parameters it operates on before the time-delayed consequence has been detected. In other words, the input needs to be stable enough, or the system needs to be in a steady state, until the consequence is stable enough to be detected to enable the learning of the behaviour of the system. Analysing of data of the sluggish systems using ML may be referred to as time-coherent ML.

There may be transient phase effects present in the metrics when a change occurs in the behavior of the system. These transient effects may be filtered from the metrics in order to apply ML techniques. Otherwise, transient effects may lead to models that have derived incorrect conclusions from the data.

Time delayed effect in sluggish systems may have important consequences from the system perspective and/or from the machine learning perspective. In order to draw the correct conclusions from the metrics, regarding e.g. causality, the outcome of events in the system need to be actually observed before applying ML algorithms. It is therefore important to detect and possibly mitigate the time shift caused by time-delayed effect.

Let us consider the transient phase effect and the time shift first from the system perspective and then from the ML perspective.

An ML engine that is configured to learn from a sluggish system needs to deal with the transient phase and time delay effects in addition to its task to learn the behavior, which may be a complex task. An ML engine may concentrate on its real task, if the steady states in the time series data are already determined beforehand in a pre-processing step. By offloading the determination of the steady states to a pre-processing step would make such an ML system more modular by feeding several next ML steps in parallel. As an example, the training phase of an ML process may be fed with bigger sliding windows data, where the steady states may be learned in the pre-processing step. Afterwards, the execution phase may be fed with smaller sliding windows data as the steady states of data have already been learned. This pre-processing step may indicate e.g. the time shift, the immediate reaction time, the time delay until reached steady state, some statistical values of the steady state range, e.g. length, max, min, average, deviation of the steady state range. It might make sense to deliver those statistical values to the next ML step instead of the time series data. This would cause a huge data reduction for the next ML step. The pre-conditioning step may also indicate if there is no steady state(s) detected in the time series data. There may be various reasons for this kind of a situation. For example, something in the system may be broken, or a situation that is happening has not been learned before, or duration of a situation that is causing the steady or stable state is too short such that there is not enough time for stabilization.

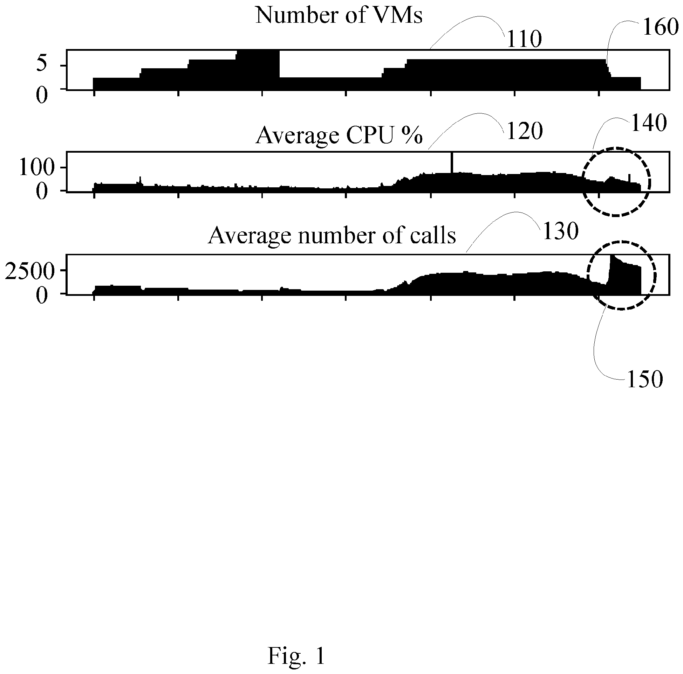

From the ML perspective, let us consider a case of a cloud system, wherein ML is used to make decisions in cloud. For example, autoscaling virtual network functions (VNFs) may be used to manage control plane functions. Time series data comprising application metrics may be received from the VNFs and platform metrics may be received from an open cloud computing platform, e.g. from Openstack. ML may be used to create a threshold-based scaling policy for the VNF. Fig. 1 shows, by way of example, time series data received or collected from a VNF. In this example, the time series data comprises three metrics: current number of virtual machines (VMs) active for the VNF 110, average central processing unit (CPU) utilization of the VMs 120, average number of calls per VM 130.

When a scaling action occurs, the autoscaling controller using ML needs to be aware at which point the system returns to a steady state. In the top panel 110, we can see the scaling actions (y-axis) over time (x-axis). The system scales up and down at various points over time. In the lower panels 120, 130, CPU utilization and number of calls in the system are displayed over time. As an example, a transient phase effect is marked by circles 140, 150, which occurs when the VNF scales in 160. When this happens there is a period of time of increased CPU load (marked by a circle 140), as the VNF rebalances the calls from the scaled in Virtual Machine (VM). If it is learned on this data without first removing these transient phase effects, the ML algorithm incorrectly learns that scaling in would increase the CPU load, and would therefore not recommend scaling in as a course of action to reduce CPU load. Thus, it would be beneficial to automatically detect the time shift between the scale in or scale out action and the effect in the metrics in order to improve the use of ML in this situation.

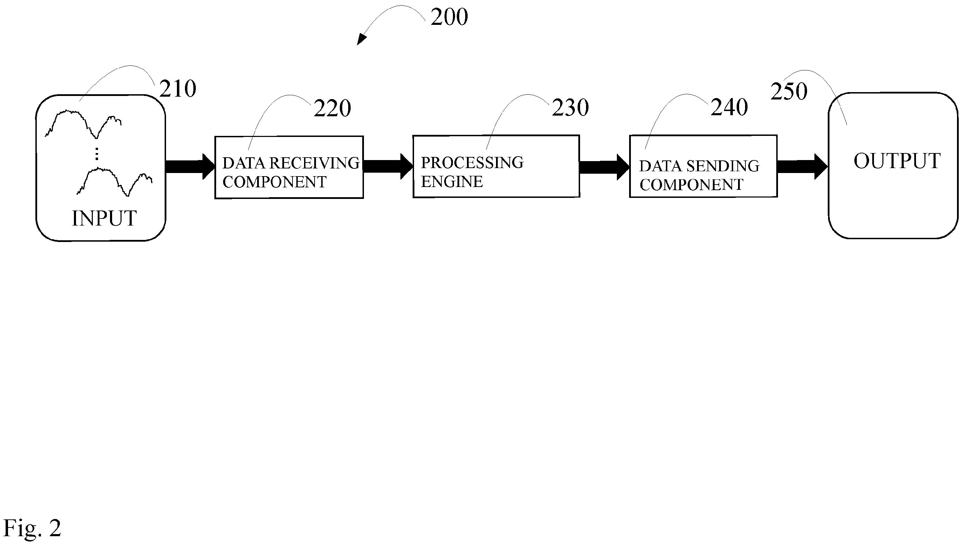

There is provided a system and a method for processing time series data e.g. for machine learning purposes. Fig. 2 shows, by way of example, an overview of a system 200 for processing time series data. Input 210 of the system is time series data comprising a set of metrics, e.g. streaming metrics or previously stored time series data. The data may comprise e.g. any time series data to be processed by ML algorithm, e.g. data from various IoT sensors. The multivariate time series data may comprise transient phase effects and/or time shifted dependencies. The input may further comprise known chronological dependencies of the metrics. The system may comprise a data receiving component 220, a processing engine 230 and a data sending component 240. The data receiving component 220 may receive the input 210, i.e. the time series data. The data receiving component 220 may forward the time series data to the processing engine 230 for processing. The data receiving component 220 may pre-process the data before the data is made available to the processing engine 230. The pre-processing of the data may comprise e.g. aggregating metrics that belong to the same load balancing devices.

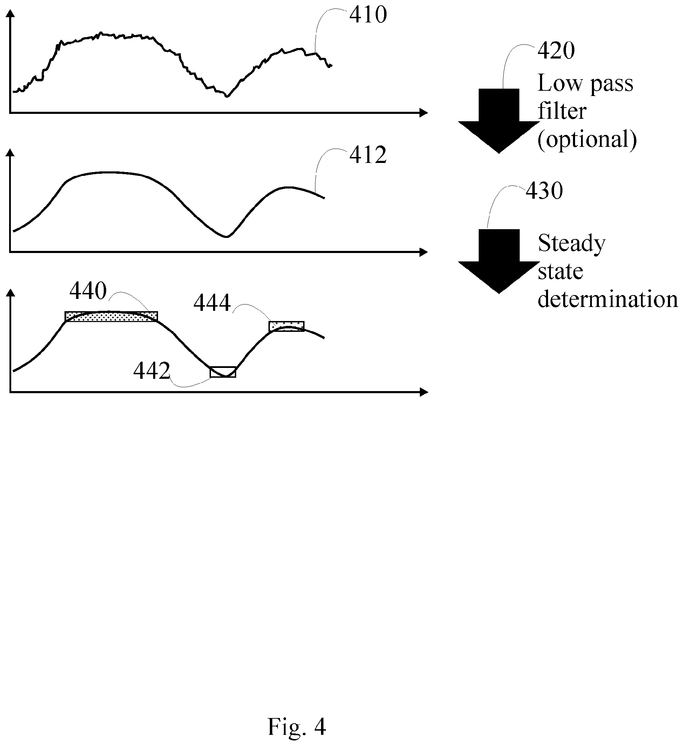

The processing engine 230 may process the data comprising the metrics received from the data receiving component 220. The data may be provided to the processing engine e.g. in sliding windows. For example, signal processing filters may be applied for filtering noise and/or detecting trend information in the metrics. The processing engine may determine steady states in the metrics, e.g. in each metric. For example, the steady states may be determined by finding time intervals in which the value of the metric does not vary significantly from the average value in that time interval. The processing engine may determine transition points between the steady states. The time shifted dependencies of the metrics may then be computed by the processing engine using information on the steady state time intervals and the transition points. Determination of the steady states, transition points and the time shifts will be described, by ways of examples, in the context of Fig. 4, Fig. 5, Fig. 6, Fig. 7 and Fig. 8.

The system 200 may provide as an output 250, e.g. by the data sending component 240, any combination of the following options: metrics that have been processed to remove time shifted dependencies; those metrics, e.g. only those metrics, that are currently in a steady state; time series data annotated with steady state information, transition point information, and/or time shifted dependencies; statistical summaries of the steady states and transition points.

Provision of the output allows filtering of the transient phase effect and correcting the time shift problem between metrics for later ML algorithms. The time coherent and steady state filtered time series data enables the next ML processing step to work in batch mode processing. The method for processing time series data as disclosed herein may be used as a pre-processing step that may reduce the time series data provided to the later ML algorithms. For example, huge set of different time series data may be reduced to statistical information on the steady state ranges. For example, mean, max, min, start and end values of the steady states may be provided as output.

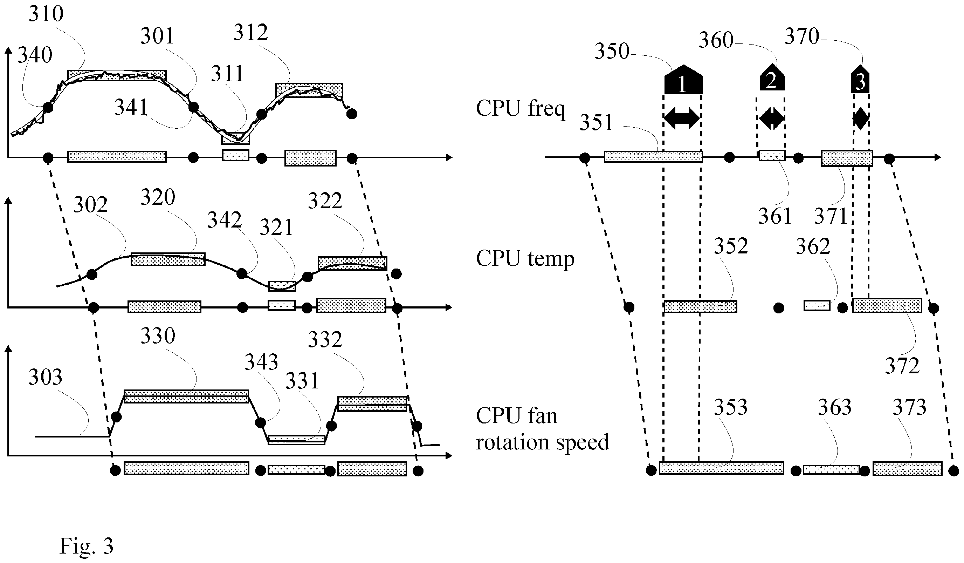

Fig. 3 shows, by way of example, time series data of a sluggish system. In this example, data of three metrics is shown. The metrics may comprise a first metric 301, a second metric 302, a third metric 303, etc. The first metric 301 may be e.g. CPU frequency, the second metric 302 may be e.g. CPU temperature, and the third metric 303 may be e.g. CPU fan rotation speed. As can be seen from the Fig. 3, a higher CPU frequency leads to a higher CPU temperature and to a higher CPU fan speed, and the effect is timely delayed.

The data received from processing may be e.g. streaming data or previously stored time series data.

Signal of a metric may be noisy in some cases. For example, the CPU frequency in Fig. 3 is bursty. To be able to determine the steady state, such a metric may be processed using signal processing filters, such as a low pass filter, to filter out the noise of the metric. The filtered signal is also shown in Fig. 3 with a thicker line.

Steady states 310, 311, 312, 320, 321, 322, 330, 331, 332 may be determined in the time series data of the metrics. For example, the steady states, or steady state ranges, or steady state segments, may be determined by finding time intervals in which the value of the metric varies within a pre-determined range, or in which the metric does not vary significantly from the average value in that time interval. A threshold value may be pre-determined for a suitable deviation from the average value. The metric may be an unprocessed metric or processed by filter(s), e.g. low pass filter. Determination of the steady states is further described in the context of Fig. 4.

The steady states may be classified as high, low or saddle turning point. Steady states 310, 312, 320, 322, 330, 332 are examples of steady states classified as high and are shown with a denser pattern. Steady states 311, 321, 331 are examples of steady states classified as low or saddle turning points and are shown with a sparse pattern. Time intervals corresponding to the steady states are also shown on the time axis (x-axis). This kind of classification of the steady states may help to find the correct time shift mapping in simple cases and/or to detect whether the time dependent reaction is proportional or anti-proportional.

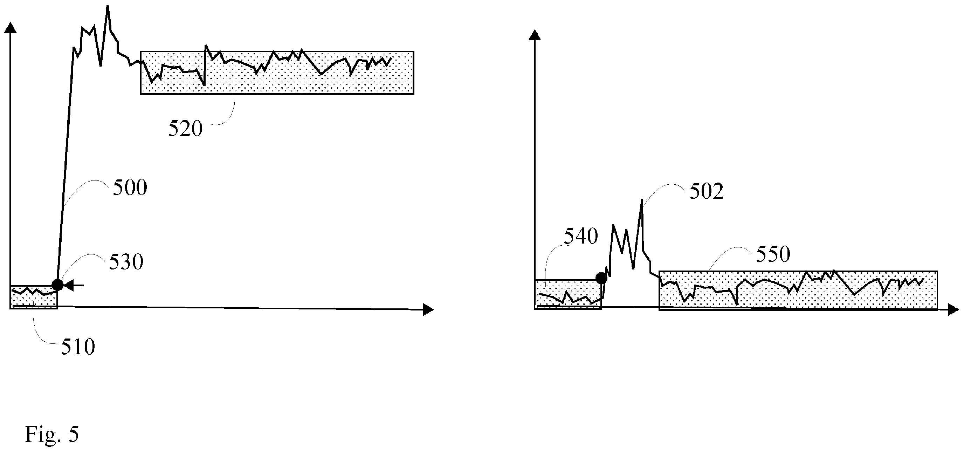

Transition points 340, 341, 342, 343 occur between consecutive steady states in a single metric. These may be used to determine the time shifts for aligning these time dependent metrics. Determination of the transition points is further described in the context of Fig. 5, Fig. 6 and Fig. 7.

In addition to determining the steady state time intervals, those dependent time series may need to be aligned properly before being used as input for time-coherent ML algorithm. In Fig. 3 (right) the problem of using the steady state ranges of time series without any alignment is shown. Data corresponding to the time ranges 1 350, 2 360 and 3 370 may be the steady state range input for ML (slotted) for stable phase learning.

In time range 1 350 the steady state 351 of the CPU frequency is long enough to observe the steady states 352, 353 of other time dependent metrics, i.e. CPU temperature and CPU fan rotation speed. In time range 2 360, only the steady state 361 of the CPU frequency is observed, but this observation does not temporally overlap the corresponding steady states 362, 363 of other time dependent metrics. In time range 3 370, CPU frequency and CPU temperature have overlapping steady states 371, 372, but the steady state 373 of the CPU fan rotation speed does not overlap with the steady states of the CPU frequency and CPU temperature. Thus, without alignment, the steady state range input for ML may lead to incorrect stable phase learning.

Fig. 4 shows, by way of example, determination of steady states of time series data 410. In case the data is noisy, it may be processed 420 by a signal processing filter, e.g. a low pass filter, moving average, binomial filter, or Holt exponential smoother. Next, the steady states are defined 430 based on the signal 412 that may be a filtered signal. The steady states 440, 442, 444 may be defined by finding time intervals or time ranges, e.g. maximal time ranges, in which the value of the metric varies within a pre-determined range, or in which the metric does not vary significantly from the average value in that time interval. A metric is stable when the measurement values do not deviate significantly from the average value from a certain time onwards, or when the values are within a certain range over a certain time range. If a metric is stable, then it is in a steady state, otherwise, it is in a transient phase, i.e. in an unstable phase.

The variation of metrics of an idle system can be taken as basis for a threshold definition of the allowed variation of a steady state. The stable state range is given, if the nearby average is more or less constant over time and the variation does not exceed the threshold of allowed variation. Thus, for identifying the steady state, e.g. two thresholds may be defined: 1) a variation threshold to determine when the variation ends the steady state, and 2) a temporal threshold to determine when a steady state begins. The latter, in other words, determines that a new steady state begins when the variation threshold is not crossed for the prescribed length of time.

When a steady state is active, the system may only store a statistical summary of the state, e.g. average value, variance, etc., in order to make the determination as to when the state should end. This circumvents the need to store the entire time series of the current active steady state, which may be prohibitively costly.

Transition points may be determined between the steady states. The steady state time range may be characterized by a maximum/minimum turning point or saddle point regarding the entire segment. Between the steady state segments there are transition points separating the steady state segments. There are alternative approaches to determine the transition points.

Fig. 5 shows, by way of example, determination of transition points between steady states, e.g. a first steady state 510 and a second steady state 520 of the time series signal 500. A transition point 530 is determined to be the point at the end of a steady state range. The end of the steady state range may be defined e.g. as the data point of the time point when the value of the metric is no longer within the steady state range. For example, the next data point after the steady state range ends may be determined as the transition point. This way of determination of transition point may be useful for metrics returning back to the same, or approximately the same, average metric level, as shown by time series 502 on the right. A first steady state 540 and a second steady state 550 seem to have approximately the same average level. When the transition point is determined this way, the following steady state need not be detected for determination of the transition point. Thus, the determination of the transition point in this way may be simpler than using information on consecutive steady states in the determination.

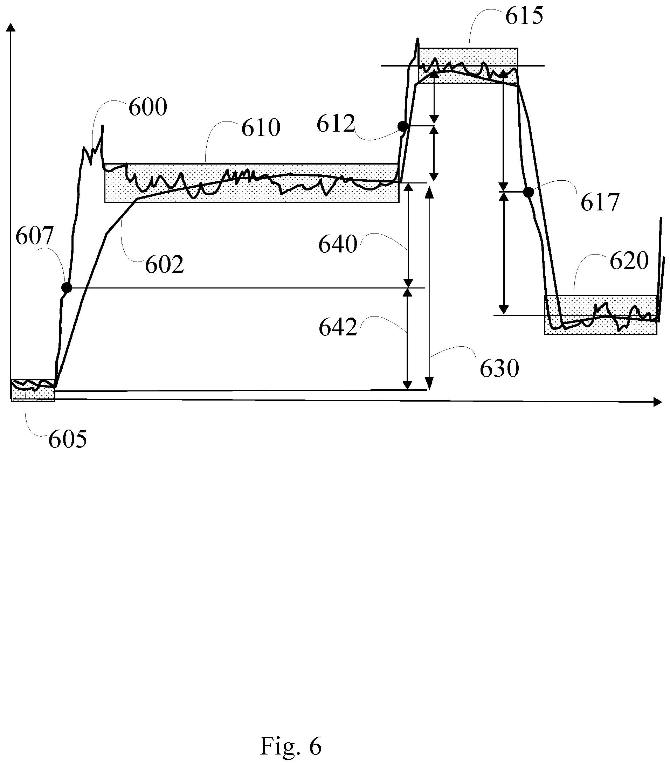

Fig. 6 shows, by way of example, determination of transition points between steady states. A time series data 600 may be filtered to obtain a filtered time series signal 602. Determination of the transition points may be carried out based on the unfiltered or the filtered signal. In the example of Fig. 6, the transition points are determined based on the unfiltered signal.

For example, a transition point 607 is determined between a first steady state 605 and a second steady state 610, a transition point 612 is determined between a second steady state 610 and a third steady state 615, and a transition point 617 is determined between a third steady state 615 and a fourth steady state 620. A transition point is determined to be the point when the value of the metric crosses the half between consecutive steady state segments. Difference 630 between values of a first steady state segment 605 and a second steady state segment 610 is determined. For example, difference may be determined between the average value of the first steady state segment and the average value of the second steady state segment. Then, the difference is halved, as illustrated by arrows 640, 642, and the half point of the difference may be determined as the transition point 607. The half point may be determined as approximately, or substantially, the half point. This approach for determining the transition points may be adequate for time series with a weak granularity in the time series data.

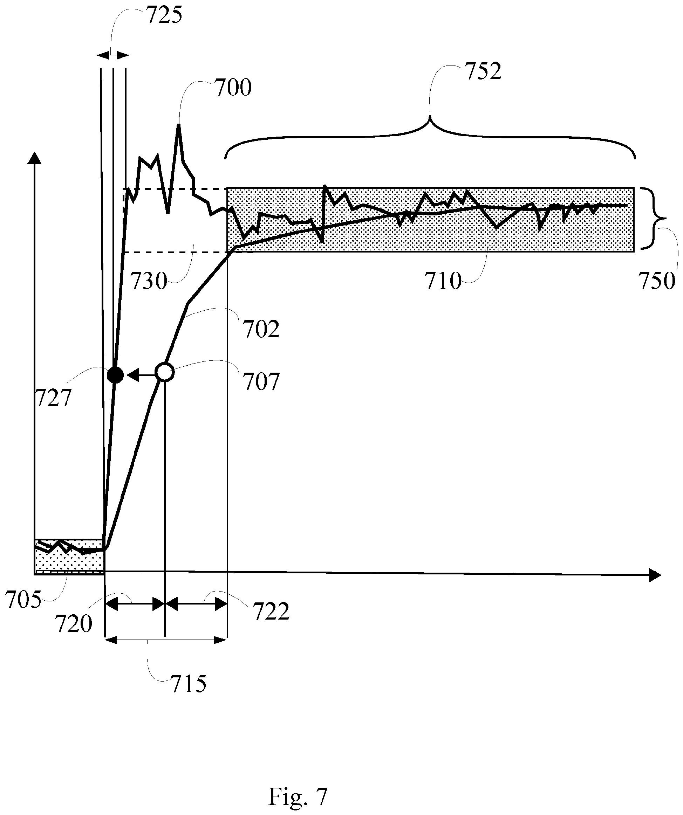

Fig. 7 shows, by way of example, determination of transition points between steady states, e.g. between a first steady state 705 and a second steady state 710. Values of the time series data are steady within a pre-determined range 750 during a time interval which is the steady state time range 752. Let us consider that the time series data 700 has been filtered, e.g. low pass filtered, to obtain a filtered time series signal 702. Time difference 715 may be determined between two consecutive steady states, i.e. between the end point of the first steady state segment 705 and the starting point of the second steady state segment 710. Then, the difference is halved, as illustrated by arrows 720, 722, and the data point at the half point of the time difference may be determined as the transition point 707. In other words, a value of the metric corresponding to the half point or middle point of the time difference 715 between consecutive steady states 705, 710 is determined as the transition point 707. The half point may be determined as approximately, or substantially, the half point.

Time series data signal 700 may be considered as an overreacting signal, since it comprises, in-between a low steady state 705 and the next high steady state 710, a bursty period with values higher than the next high steady state 710. When overreacting signals settle to the next low steady state, there may be, in-between a high steady state and the next low steady state, a bursty period with lower values than the next low steady state. For overreacting signals transition points determined as the middle, or approximately as the middle, between low pass filtered steady state segments may lead to transition points that are placed too late in the time series. In case of overreacting signals, the steady state time range may be extended 730, i.e. it may be set to start before the originally determined starting time point. For example, the steady state time interval may be extended to start at a time point when the signal reached the value falling into the steady stage value range 750. Then, a new time difference 725 is determined between the end point of the first steady state segment 705 and the new starting point of the second, extended 730, steady state segment. The data point at the half point of the time difference may be determined as the transition point 727.

When transition points have been determined for the time series data of different metrics, e.g. for the first time series data of a first metric and the second time series data of a second metric, time shifts may be determined. Time shift detection algorithm may be applied to any pair of metrics.

The time series data of the metrics, e.g. of each metric, may be discretized to create a metric string. The input to the discretization phase is a metric m and a discretization time parameter t. The output of the discretization phase is a string of symbols, where each symbol represents one of the following states: "steady" (S), "unstable" (U), and "transition point" (T). Each symbol represents a contiguous time period of length t in the input metric m. As an illustrative example, consider a metric m, annotated based on the determined steady states and transition points:

| time: | annotation: |
|---|---|
| 9:01 | steady state start |
| 9:03 | steady state end |
| 9:04 | transition point |
| 9:10 | steady state start |
| 9:15 | steady state end |

The string of symbols output during the discretization phase, for metric m and a time parameter of e.g. 1 minute would be as follows: *SSSTUUUUUSSSSSS.* Each of the 15 symbols represents a 1-minute time period from 9:01 until 9:15. The time parameter t may be defined to be suitable for the application.

The time shift detection operates on any pair of strings, Seq1 and Seq2, corresponding to metrics m1 and m2.

The assumption is that these strings have equal length. The best temporal alignment of Seq1 and Seq2 may be determined. The best temporal alignment may be determined e.g. by applying a modified Hamming distance measure H_{mod}(Seq1, Seq2) to determine the distance between Seq1 and Seq2. Alternatively, other distance measures such as a modified Levenshtein distance or a modified Damerau-Levenshtein distance may be applied. Let Seq^{k} denote the string Seq prepended with k occurrences of the symbol U and let Seq^{-k} denote the string Seq postpended with k occurrences of the symbol U. Given two sequences Seq1 and Seq2, our goal is to return:
arg min_{k} H_{mod} (Seq1^{-k}, Seq2^{k}) for k in [-w, w].

Here w is an upper bound for the time shift, to be selected based on practical considerations. For example, if actions must be taken within a certain latency based on the result of the ML model, then there is an inherent upper bound for w. For example, in the cloud scenario, a time shift of a few minutes may be added as latency to any decisions made by the ML model. Thus, in such scenario, it might not make sense to consider time shifts larger than the latency.

Once we have identified k, then the time shift is k^{∗}t (t is the discretization time parameter). In the case that k is positive, the implication is that Seq2 is time shifted, or delayed by k^{∗}t time units with respect to Seq1. If k is negative, the implication is that Seq1 is time shifted, or delayed by k^{∗}t units with respect to Seq2.

Thus, if the relationships between the metrics are known, or suspected, by the user, then the output of this algorithm may be used to validate those suspicions and discover the precise time shift.

Optionally, if the relationships are not known, then this algorithm may be applied to all pairs of metrics in a best-effort attempt to identify the relationships between the metrics.

Referring back to the modified Hamming distance, let us explain the computation of H_mod(Seq1, Seq2). The usual Hamming distance for strings would count the number of indices in the pairs of strings where there is a mismatch between the symbols. Precisely:

H(Seq1, Seq2) = sum_{i=1}^{|Seq1|} I(Seq1[i],Seq2[i]), where I(a,b) = 1 if a != b, otherwise 0.

The modified Hamming distance H_mod(Seq1, Seq2) treats symbols in the string differently. Several types of costs may be used: 1) cost of a mismatch between a steady state and unstable symbol (c_SU); 2) the cost of a mismatch between a steady state and transition point symbol (c_ST); and 3) the cost of "shifting" a transition point symbol so that it aligns with another transition point symbol (c_TT). The cost c_TT may be further multiplied e.g. by the length of the shift or some other measure that describes the amount of the shift.

As an example, consider the following three sequences or strings each comprising 30 symbols:
Seq1 = *UUSSSSSSUTUUUUUUSSSSUTUUUUUUUU*
Seq2 = *UUUUSSSSUUTUUUUUUSSUUTUUUUUUUU*
Seq3 = *UUUUSSSSUUUUUTUUUSSUUTUUUUUUUU*

Intuitively, Seq2 is closer to Seq1 than Seq3, as the first transition point is slightly farther away in Seq3. However, the normal Hamming distance would result in H(Seq1, Seq2) = = H(Seq1, Seq3).

Using the modified Hamming distance, the distance is computed in two phases. In the first phase, we compute the distance between the transition points, using Hamming distance with shifts. The Hamming distance with shifts between two sequences, e.g. Seq1 and Seq2, is the minimum cost of a sequence of operations that transforms Seq1 to Seq2. In the second phase, we then compute the Hamming distance between the U, S, and shifted T symbols, with the three separate costs for each type of mismatch. The final alignment cost may be determined as the sum of the costs of the first and second phases.

The first phase converts the sequences into binary, marking only the T symbols with a 1 bit. So for example, Seq1, Seq2 and Seq3 become:
Seq1= *000000000100000000000100000000*
Seq2 = *000000000010000000000100000000*
Seq3 = *000000000000010000000100000000*
respectively.

Given two arbitrary sequences Seq1 and Seq2, let D1 be the sorted vector indicating all the positions that 1s appear in Seq1 but not Seq2, and D2 be the vector indicating all the positions that 1s appear in Seq2 but not Seq1. If we assume |D1| = = |D2| = = k then the cost of modifying Seq1 to match Seq2 by shift operations is simply sum_{i=1}^{k} abs(D1(i) - D2(i)). Alternatively, a more complex dynamic programming algorithm may be used to compute the cost in the first phase, e.g. in cases where the above assumption does not hold. The alternative algorithm is disclosed in paper "A Linear-Time Algorithm for Hamming Distance with Shifts" of Jiang M. Theory Comput Syst (2009) 44:349-355. Although more complex, the algorithm nonetheless runs in linear time.

Regardless of the implementation (the simplified setting described above or that of Jiang's) the algorithm runs in time linear in the length of the two input strings. The second phase also runs in linear time. Thus, the computation of H_{mod} is linear in the length of the input strings. The overall running time of the time shift computation is therefore O(n ^{∗} w), wherein the n is the length of the string and w is the upper bound on the time shift.

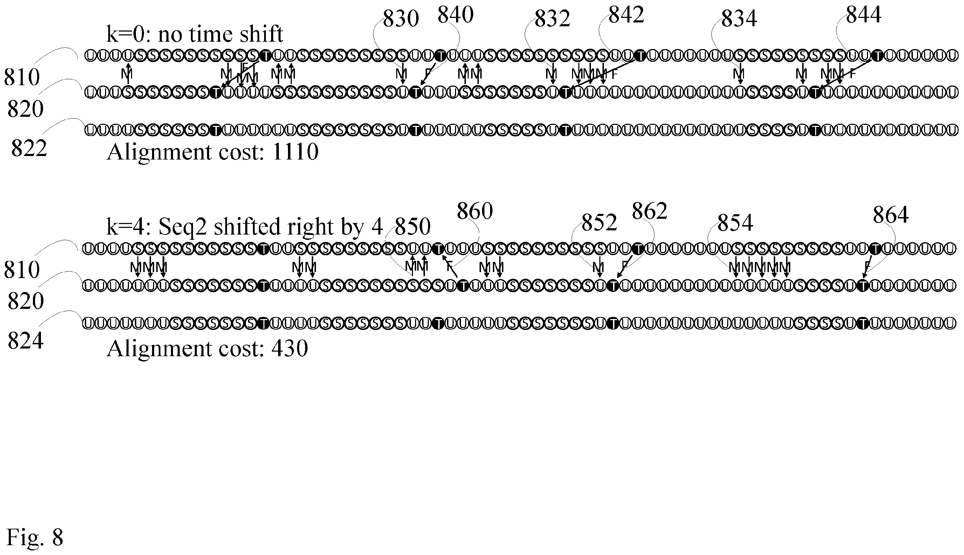

Fig. 8 shows, by way of example, a time shift procedure for two longer sequences, Seq1 810 and Seq2 820. Time series data has been discretized to obtain sequences or strings of symbols. Steady state symbols are denoted as "S", unstable state symbols are denoted as "U", and the transition point symbols are denoted as "T". The upper bound on the time shift and the costs are defined in this example as
*w = 5, c_SU* = *10, c_TT = 50,* and *c_ST = 30.*

To align the strings, modifications may be made to the symbols and/or the symbols and/or the whole sequences may be shifted in time. The algorithm may be configured to try different time shifts for a pair of sequences, wherein the time shift indicates amount of shifting the first sequence and the second sequence with respect to each other. Alignment costs may be computed for different time shifts. The modified Hamming distance as described above may be used to compute the alignment costs. The costs may be compared, and the time shift may be selected based on the comparison of the alignment costs. For example, the shift operation resulting to the smallest cost may be selected.

The algorithm may e.g. try time shifts ranging from from -5 to 5, where negative values correspond to shifting Seq1 810 to the right, and positive values correspond to shifting Seq2 820 to the right.

In the top panel of Fig. 8, the two sequences 810, 820 are shown with no time shift, i.e. k=0, and the resulting sequence 822. Edges labelled with M 830, 832, 834 indicate that a modification had to be made to align the strings, whereas edges labelled with F 840, 842, 844 indicate a shift operation. Therefore, edges labelled with M have a cost of either c_SU or c_ST depending on the type of modification, whereas edges with F have a cost of 50, multiplied by the length of the edge. Resulting alignment cost in this case is 1110.

Based on comparison of the costs, the best time shift is determined with k = 4 (bottom panel), that shifts Seq2 820 to the right by 4 time periods. Edges labelled with M 850, 852, 854 indicate that a modification had to be made to align the strings, whereas edges labelled with F 860, 862, 864 indicate a shift operation. Alignment cost of the resulting sequence 824 in this case is 430, which is clearly smaller than the alignment cost of trial without any time shift.

The conclusion to draw is that, if there is a causal relationship between Seq1 and Seq2, it is likely the case that Seq2 impacts Seq1, i.e. Seq1 is temporally affected by Seq2, with a time shift of 4 time periods, or a time lag of 4 time periods.

The time shift information may then be used to make the time dependent data series time coherent as a pre-processing step for the following ML.

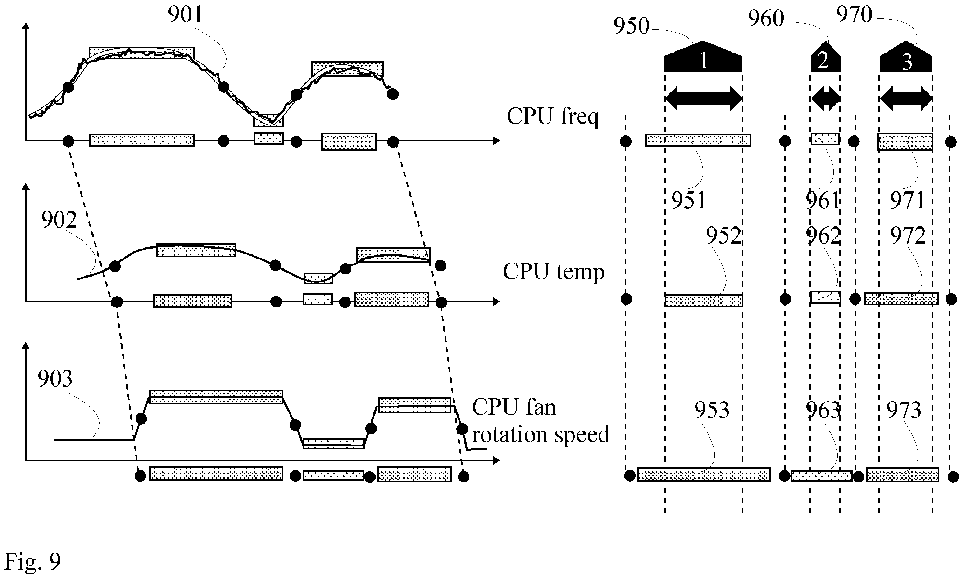

Fig. 9 shows, by way of example, aligned time series data. As in Fig. 3, data of three metrics is shown, i.e. data of CPU frequency 901, CPU temperature 902 and CPU fan rotation speed 903. On the right, it is shown that after processing the time series data according to the method disclosed herein, the time dependent steady state ranges are steady for all related time series within a common time range for the next ML step, which may be configured to learn from stable states. For example, in time range 1 950, the steady states 951, 952, 953 of different metrics overlap; in time range 2 960, the steady states 961, 962, 963 of different metrics overlap; in time range 3 970, the steady states 971, 972, 973 of different metrics overlap. Data corresponding to the time ranges 1 950, 2 960 and 3 970 may be the steady state range input for ML (slotted) for stable phase learning.

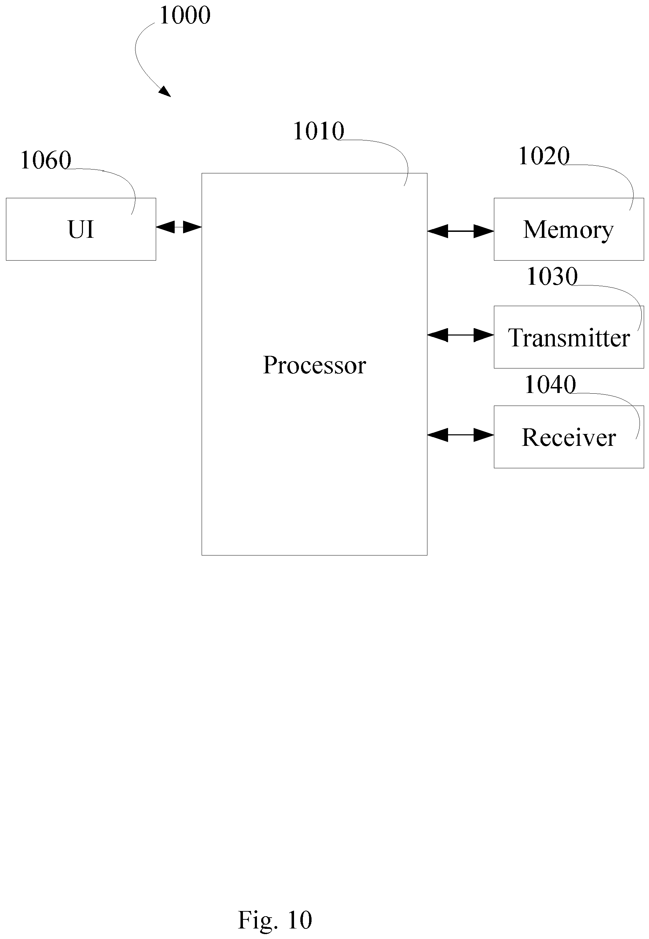

Fig. 10 shows, by way of example, a block diagram of an apparatus capable of e.g. processing time series data. Illustrated is device 1000, which may comprise, for example, a computing device, e.g. a cloud based computing device. Comprised in device 1000 is processor 1010, which may comprise, for example, a single- or multi-core processor wherein a single-core processor comprises one processing core and a multi-core processor comprises more than one processing core. Processor 1010 may comprise, in general, a control device. Processor 1010 may comprise more than one processor. Processor 1010 may be a control device. Processor 1010 may be means for performing method steps in device 1000. Processor 1010 may be configured, at least in part by computer instructions, to perform actions.

A processor may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 1000 may comprise memory 1020. Memory 1020 may comprise random-access memory and/or permanent memory. Memory 1020 may comprise at least one RAM chip. Memory 1020 may comprise solid-state, magnetic, optical and/or holographic memory, for example. Memory 1020 may be at least in part accessible to processor 1010. Memory 1020 may be at least in part comprised in processor 310. Memory 1020 may be means for storing information. Memory 1020 may comprise computer instructions that processor 1010 is configured to execute. When computer instructions configured to cause processor 1010 to perform certain actions are stored in memory 1020, and device 1000 overall is configured to run under the direction of processor 1010 using computer instructions from memory 1020, processor 1010 and/or its at least one processing core may be considered to be configured to perform said certain actions. Memory 1020 may be at least in part external to device 1000 but accessible to device 1000.

Device 1000 may comprise a transmitter 1030. Device 1000 may comprise a receiver 1040. Transmitter 1030 and receiver 1040 may be configured to transmit and receive, respectively, information in accordance with at least one cellular or non-cellular standard. Transmitter 1030 may comprise more than one transmitter. Receiver 1040 may comprise more than one receiver. Transmitter 1030 and/or receiver 1040 may be configured to operate in accordance with global system for mobile communication, GSM, wideband code division multiple access, WCDMA, 5G, long term evolution, LTE, IS-95, wireless local area network, WLAN, Ethernet and/or worldwide interoperability for microwave access, WiMAX, standards, for example.

Device 1000 may comprise user interface, UI, 1060. UI 1060 may comprise at least one of a display, a keyboard, a touchscreen, a speaker and a microphone. A user may be able to operate device 1000 via UI 1060, for example to manage digital files, e.g. time series data files from various sensors, stored in memory 1020 or on a cloud accessible via transmitter 1030 and receiver 1040.

Processor 1010 may be furnished with a transmitter arranged to output information from processor 1010, via electrical leads internal to device 1000, to other devices comprised in device 1000. Such a transmitter may comprise a serial bus transmitter arranged to, for example, output information via at least one electrical lead to memory 1020 for storage therein. Alternatively to a serial bus, the transmitter may comprise a parallel bus transmitter. Likewise processor 1010 may comprise a receiver arranged to receive information in processor 1010, via electrical leads internal to device 1000, from other devices comprised in device 1000. Such a receiver may comprise a serial bus receiver arranged to, for example, receive information via at least one electrical lead from receiver 1040 for processing in processor 1010. Alternatively to a serial bus, the receiver may comprise a parallel bus receiver.

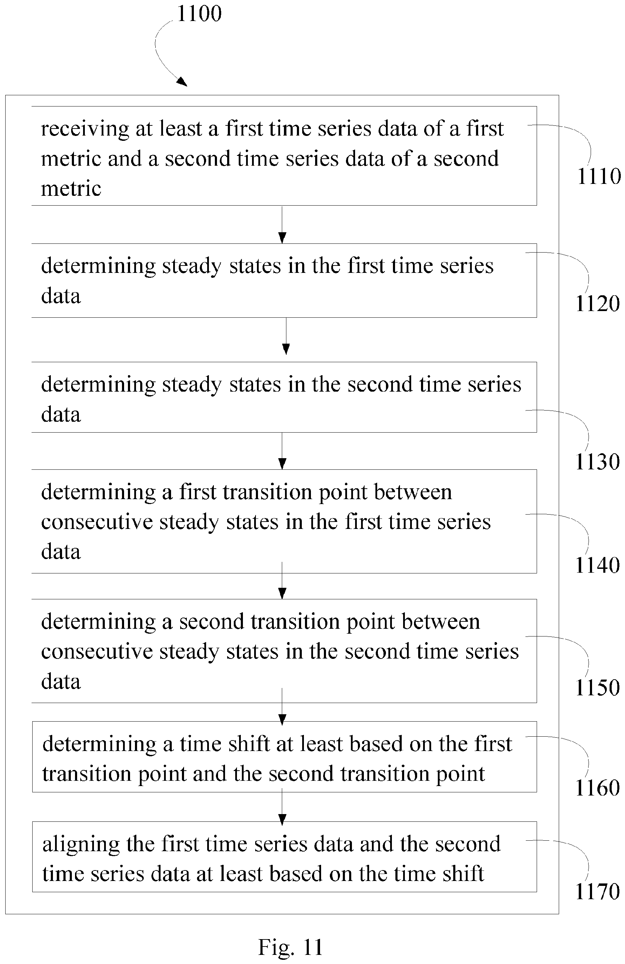

Fig. 11 is a flow graph of a method for processing time series data. The phases of the illustrated method may be performed e.g. by the device 1000. The method 1100 comprises receiving 1110 at least a first time series data of a first metric and a second time series data of a second metric. The method 1100 comprises determining 1120 steady states in the first time series data. The method 1100 comprises determining 1130 steady states in the second time series data. The method 1100 comprises determining 1140 a first transition point between consecutive steady states in the first time series data. The method 1100 comprises determining 1150 a second transition point between consecutive steady states in the second time series data. The method 1100 comprises determining 1160 a time shift at least based on the first transition point and the second transition point. The method 1100 comprises aligning 1170 the first time series data and the second time series data at least based on the time shift.

## Claims

1. An apparatus comprising means for:
- receiving at least a first time series data of a first metric and a second time series data of a second metric;
- determining steady states in the first time series data;
- determining steady states in the second time series data;
- determining a first transition point between consecutive steady states in the first time series data;
- determining a second transition point between consecutive steady states in the second time series data;
- determining a time shift at least based on the first transition point and the second transition point; and
- aligning the first time series data and the second time series data at least based on the time shift.

2. The apparatus of claim 1, further comprising means for
filtering a first time series data and/or a second time series data.

3. The apparatus of claim 1 or 2, wherein the steady states are determined by finding time intervals in which the value of the metric varies within a pre-determined range.

4. The apparatus of any preceding claim, wherein determining of the first transition point comprises
determining an end point of a first steady state of the consecutive steady states of the first time series data as the first transition point.

5. The apparatus of any of the claims 1 to 3, wherein determining of the first transition point comprises
determining a difference between average values of the consecutive steady states of the first time series data;
determining a half point of the difference as the first transition point.

6. The apparatus of any of the claims 1 to 3, wherein determining of the first transition point comprises
determining a time difference between the consecutive steady states of the first time series data;
determining a point at half point of the time difference as the first transition point.

7. The apparatus of any of the claims 1 to 3, wherein determining of the first transition point comprises
determining an extended steady state by determining the time interval of the steady state to start when the first time series data reaches the pre-determined time range for the first time;
determining a time difference between the consecutive steady states, wherein latter of the consecutive steady states is the extended steady state;
determining a point at half point of the time difference as the first transition point.

8. The apparatus of any preceding claim, further comprising means for
discretizing the first time series data to obtain a first sequence of symbols representing different states of time series data;
discretizing the second time series data to obtain a second sequence of symbols representing different states, wherein each symbol represents a pre-determined time period and the state of time series data is one of a steady state; an unstable state; transition point.

9. The apparatus of claim 8, further comprising means for
determining a distance between the first sequence and the second sequence.

10. The apparatus of claim 9, wherein the distance is determined based on Hamming distance.

11. The apparatus of any of the claims 8 to 10, further comprising means for
determining Hamming distance with shifts between the first transition point and the second transition point.

12. The apparatus of any of the claims 8 to 11, further comprising means for assigning costs for mismatches between the symbols between the first sequence and the second sequence;
computing alignment costs for different time shifts between the first sequence and the second sequence, wherein the time shift indicates amount of shifting the first sequence and the second sequence with respect to each other;
selecting a time shift based on comparison of the alignment costs.

13. The apparatus of any preceding claim, further comprising means for providing as output one or more of
- aligned time series data;
- information on steady states of the first time series data and of the second time series data;
- time series data annotated with steady state information, transition point information, and/or time shift information.

14. The apparatus of any preceding claim, wherein the means comprises at least one processor; and at least one memory including computer program code, the at least one memory and the computer program code configured to, with the at least one processor, cause the performance of the apparatus.

15. A method comprising:
- receiving at least a first time series data of a first metric and a second time series data of a second metric;
- determining steady states in the first time series data;
- determining steady states in the second time series data;
- determining a first transition point between consecutive steady states in the first time series data;
- determining a second transition point between consecutive steady states in the second time series data;
- determining a time shift at least based on the first transition point and the second transition point; and
- aligning the first time series data and the second time series data at least based on the time shift.
